(19)

Europäisches
Patentamt
European
Patent Office
Office européen
des brevets

(11) **EP 2 325 257 A1**

(12) **EUROPEAN PATENT APPLICATION**

(43) Date of publication:
**25.05.2011 Bulletin 2011/21**

(21) Application number: **09176529.7**

(22) Date of filing: **19.11.2009**

(51) Int Cl.:
*C08L 67/02* (2006.01)          *C08L 69/00* (2006.01)
*C08L 75/04* (2006.01)          *C08L 77/12* (2006.01)
*C08L 53/00* (2006.01)          *C08L 53/02* (2006.01)

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(71) Applicant: **DSM IP Assets B.V.**
**6411 TE Heerlen (NL)**

(72) Inventors:
• **Aussems, Hendricus Franciscus**
 **6412 HZ, Heerlen (NL)**
• **Schmidt, Angelika**
 **D-52538, SELFKANT (DE)**

(74) Representative: **Morariu Radu, Mihai Dorin**
 **DSM Intellectual Property**
 **P.O. Box 4**
 **6100 AA Echt (NL)**

(54) **Process for producing a shaped article**

(57)     Process for producing a shaped article of a polymer composition containing a thermoplastic elastomer (A) chosen out of the group of a copolyester elastomer, a copolyamide elastomer and a thermoplastic polyurethane elastomer, comprising the steps:
1) providing a pre-form at a temperature above the melting temperature of the composition,
2) shaping the pre-form into the shape of the shaped article,
3) cooling down the shaped pre-form to obtain the shaped article,

characterized in that, the composition contains a thermoplastic polymer (B) that has a ratio

$$\eta^*1/\eta^*2 > 5 \quad (1),$$

$\eta^*1$ is the complex shear viscosity of the second thermoplastic elastomer measured at 240° C and a shear rate of 0.1 rad/s,
$\eta^*2$ is the complex shear viscosity of the second thermoplastic elastomer measured at 240° C at a shear rate of 100 rad/s,
both viscosities measured according to ISO 6721-10: 1999.

EP 2 325 257 A1

**Description**

The invention relates to a process for producing a shaped article of a polymer composition containing a thermoplastic elastomer (A) chosen out of the group of a thermoplastic polyester elastomer, a thermoplastic polyamide elastomer and a thermoplastic polyurethane elastomer, comprising the steps:

    1) providing a pre-form at a temperature above the melting temperature of the composition,
    2) shaping the pre-form into the shape of the shaped article,
    3) cooling down the shaped pre-form to obtain the shaped article.

Examples of such processes include blow molding and molding of corrugated tubes.

Thermoplastic elastomers are not widely used in these kind of processes, since it is difficult to handle the pre-form of the composition containing the thermoplastic elastomer. The pre-from is not stable, but shows the tendency to deform under the influence of for example gravity. In one type of blow molding process a polymer composition is forced through an annular slit die so that a parison is produced as the pre-form, which parson is placed in a mold and blown up in the mold until it touches the cold walls of the mold. In case the polymer composition contains a thermoplastic elastomer the parison has the tendency to sag. Because of the sagging the wall thickness of the parison becomes undefined, causing sometimes even the parison to break open during blowing it up in the mold.

Object of the invention is to provide a process for producing a shaped article of a polymer composition containing a thermoplastic elastomer (A), comprising the steps mentioned above, which process does not show the problems with handling of the pre-form.

Surprisingly this object is obtained if the polymer composition contains a thermoplastic polymer (B) that has a ratio $n^*1/n^*2 > 5$ (1),

    $n^*1$ is the complex shear viscosity of the thermoplastic polymer (B) measured at 240° C and a shear rate of 0.1 rad/s and
    $n^*2$ is the complex shear viscosity measured at 240° C at a shear rate of 100 rad/s, both viscosities measured according to ISO 6721-10:1999.

In the process according to the present invention it is possible to handle the pre-form very well. Furthermore it is possible to produce with shorter cycle times than with traditional blow molding processes, because the composition used in the process according to the invention allows a very fast production of the pre-forms.

As the thermoplastic elastomer a thermoplastic elastomer is used that is chosen out of the group of a thermoplastic copolyester elastomer, a thermoplastic copolyamide elastomer and a thermoplastic polyurethane elastomer. It is possible that the composition contains two or even three thermoplastic elastomers chosen form the group above. Preferably however the composition contains only one thermoplastic elastomer chosen from the group above.

Thermoplastic polyurethane elastomers may be obtained by the condensation of diisocyanates with short-chain diols and long chain diols, for example polyester or polyether diols. The polymer chain segments comprising the monomeric units of the diisocyanates and the short-chain diols are the crystalline hard segments and the chain segments derived from the long chain diols are the soft segments. The diisocyanate most commonly used is 4,4'-diphenylmethane diisocyante (MDI). Commonly used short-chain diols include ethylene glycol, 1,4-butanediol, 1,6-hexanediol and 1,4-di-β-hydroxyethoxybenzene.

The copolyester elastomers and copolyamide elastomers are thermoplastic polymers with elastomeric properties comprising polyester hard segments or polyamide hard segments, and soft segments derived from another polymer. The polyester hard segments in the copolyester elastomers are generally composed of monomer units derived from at least one alkylene diol and at least one aromatic or cycloaliphatic dicarboxylic acid. The polyamide hard segments of the copolyamide elastomers are generally composed of monomer units from at least one aromatic and/or aliphatic diamine and at least one aromatic or aliphatic dicarboxylic acid, and or an aliphatic amino-carboxylic acid.

The hard segments typically consist of a polyester or polyamide having a melting temperature or glass temperature, where applicable, well above room temperature, and may be as high as 300°C or even higher. Preferably the melting temperature or glass temperature is at least 150 °C, more preferably at least 170°C or even at least 190 °C. Still more preferably the melting temperature or glass temperature of the hard segments is in the range of 200 - 280 °C, ort even 220 - 250 °C. The soft segments typically consist of segments of an amorphous polymer having a glass transition temperature well below room temperature. Preferably the glass temperature of the amorphous polymer is at most 0 °C, more preferably at most -10 °C or even at most -20 °C. Still more preferably the glass temperature of the soft segments is in the range of -20 - -50 °C, ort even -30 - -60 °C.

Suitably, the copolyamide elastomer is a copolyetheramide elastomer. Copolyetheramide elastomers are available, for example, under the trade name PEBAX, from Elf Atochem, France.

Preferably, the thermoplastic elastomer is a copolyester elastomer. Examples of copolyester elastomers include a copolyesterester elastomer, a copolycarbonateester elastomer or a copolyetherester elastomer; i.e. a copolyester block copolymer with soft segments derived from a polyester, a polycarbonate or, respectively, a polyether. Copolyester elastomers are available, for example, under the trade name Arnitel, from DSM Engineering Plastics B.V. The Netherlands.

Suitable copolyesterester elastomers are described, for example, in EP-0102115-B1.

Copolyetherester elastomers have soft segments derived from at least one polyalkylene oxide glycol. Copolyetherester elastomers and the preparation and properties thereof are in the art and for example described in detail in Thermoplastic Elastomers, 2nd Ed., Chapter 8, Carl Hanser Verlag (1996) ISBN 1-56990-205-4, Handbook of Thermoplastics, Ed. O. Otabisi, Chapter 17, Marcel Dekker Inc., New York 1997, ISBN 0-8247-9797-3, and the Encyclopedia of Polymer Science and Engineering, Vol. 12, pp. 75-117 (1988), John Wiley and Sons, and the references mentioned therein.

The aromatic dicarboxylic acid in the hard segments of the polyetherester elastomer suitably is selected from the group consisting of terephthalic acid, isophthalic acid, phthalic acid, 2,6-naphthalenedicarboxylic acid and 4,4-diphenyldicarboxylic acid, and mixtures thereof. Preferably, the aromatic dicarboxylic acid comprises terephthalic acid, more preferably consists for at least 50 mole %, still more preferably at least 90 mole %, or even fully consists of terephthalic acid, relative to the total molar amount of dicarboxylic acid.

The alkylene diol in the hard segments of the polyetherester elastomer suitably is selected from the group consisting of ethylene glycol, propylene glycol, butylene glycol, 1,2-hexane diol, 1,6-hexamethylene diol, 1,4-butane diol, benzene dimethanol, cyclohexane diol, cyclohexane dimethanol, and mixtures thereof. Preferably, the alkylene diol comprises ethylene glycol and/or 1,4 butane diol, more preferably consists for at least 50 mole %, still more preferably at least 90 mole %, or even fully consists of ethylene glycol and/or 1,4 butane diol, relative to the total molar amount of alkylene diol.

The hard segments of the polyetherester elastomer most preferably comprise or even consist of polybutylene terephthalate segments.

Suitably, the polyalkylene oxide glycol is a homopolymer or copolymer on the basis of oxiranes, oxetanes and/or oxolanes. Examples of suitable oxiranes, where upon the polyalkylene oxide glycol may be based, are ethylene oxide and propylene oxide. The corresponding polyalkylene oxide glycol homopolymers are known by the names polyethylene glycol, polyethylene oxide, or polyethylene oxide glycol (also abbreviated as PEG or PEO), and polypropylene glycol, polypropylene oxide or polypropylene oxide glycol (also abbreviated as PPG or PPO), respectively. An example of a suitable oxetane, where upon the polyalkylene oxide glycol may be based, is 1,3-propanediol. The corresponding polyalkylene oxide glycol homopolymer is known by the name of poly(trimethylene)glycol. An example of a suitable oxolane, where upon the polyalkylene oxide glycol may be based, is tetrahydrofuran. The corresponding polyalkylene oxide glycol homopolymer is known by the name of poly(tretramethylene)glycol (PTMG) or polytetrahydrofuran (PTHF). The polyalkylene oxide glycol copolymer can be random copolymers, block copolymers or mixed structures thereof. Suitable copolymers are, for example, ethylene oxide / polypropylene oxide block-copolymers, (or EO/PO block copolymer), in particular ethylene-oxide-terminated polypropylene oxide glycol.

The polyalkylene oxide can also be based on the etherification product of alkylene diols or mixtures of alkylene diols or low molecular weight poly alkylene oxide glycol or mixtures of the aforementioned glycols.

Preferably, the polyalkylene oxide glycol is selected from the group consisting of polypropylene oxide glycol homopolymers (PPG), ethylene oxide / polypropylene oxide block-copolymers (EO/PO block copolymer) and poly(tretramethylene)glycol (PTMG), and mixtures thereof.

Preferably the thermoplastic elastomer is a copolycarbonateester elastomer. Suitable copolycarbonateester elastomers are described, for example, in EP-A-0846712 and EP-A-1964871. The hard segments is the copolycarbonate ester in principle may be the same as described above for the copolyesterester and copolyetherester elastomers. The soft segments suitably contain monomeric units of at least one alkylene carbonate The alkylene carbonate may be represented by the formula

$$-O-(CR_2)_x-O-C-$$

Where R =H, alkyl or aryl
X=2-20.

Preferably the alkylenecarbonate is hexamethylene carbonate. It is also possible that the copolycarbonateester contains further units, derived from an alophatic diol, an aliphatic diol or lactone. A good example is butylene adipate. In case a lactone is used, preference is given to polycaprolactone.

Preferably a thermoplastic polymer (B) is used having a value of $n^*1/n^*2 > 8$, more preferably >12, even more preferably >16, even more preferably >20, even more preferably >24.

Preferable the thermoplastic polymer (B) has a $n^*1 > 1000$ Pa.s, more preferably $n^*1 > 2000$ Pa.s, even more preferably n*1 > 4000 n*1 Pa.s, even more preferably > 8000 Pa.s. At higher n*1 the stability of the pre-form is at the same good level with lower amounts of the thermoplastic polymer.

Examples of all kind of thermoplastic polymers (B) include those polymers that are compatible with the thermoplastic elastomer, with or without the use of a suitable compatibiliser, as long as the conditions of formulae 1 are fulfilled. The skilled person can find these polymers by measuring their viscosities at the predescribed shear rates.

Preferably the thermoplastic polymer (B) is a styrene block copolymer. Examples are styrene-butadiene-styrene (SBS) and styrene-isoprene-styrene (SIS), styrene-acrylonitrile-ethylene-propylene-ethylidene norbornene copolymer (AES). More preferably as a styrene block copolymer a saturated styrene block copolymer is used. Good examples of these include styrene-ethylene-butylene-styrene (SEBS) copolymer, a hydrogenated product of styrene-acrylonitrile-ethylene-propylene-ethylidene norbornene copolymer (AES), and a hydrogenerated product thereof. Further examples of saturated styrene block copolymer further include an ethylene-butylene-styrene in the midblock (S-(EB/S)-S) and polystyrene-b-poly(ethylene/propylene), polystyrene-b-poly(ethylene/propylene)-b-polystyrene, polystyrene-b-poly(ethylene/butylene)-b-polystyrene and polystyrene-b-poly(ethylene-ethylene/propylene)-b-polystyrene.

Preferably SEBS is used.

Good results are obtained if the composition contains between 10 and 99 wt. % by weight of the first thermoplastic elastomer (A), the weight % being calculated on the sum of components (A) and (B).

Preferably the composition contains between 20 and 98 wt. % of the thermoplastic elastomer, more preferably between 40 and 75 wt. %, the weight % being calculated on the sum of components (A) and (B).

Preferably the thermoplastic elastomer has a melt flow rate (MFR, 230°C, 2.16kg) of at least 1 g/10min, more preferably of 5 g/10min, most preferably of 10 g/10min (measured according to ASTM D1238). With higher melt flow rate the production speed of the pre-form may easily be further increased.

The composition may further comprise the usual additives, for example antioxidants, dyes or pigments, UV absorbers, hydrolytic stabilizers, anti-static agents, fillers, lubricants etc. The composition may comprise between 0 and 5 parts by weight of the additives at 100 parts by weight of A + B.

The process of the present invention may be any process that contains the steps of

1) providing a pre-form at a temperature above the melting temperature of the composition,
2) shaping the pre-form to obtain the shape of the shaped article,
3) cooling down the shaped pre-form to obtain the shaped article.

Preferably the process according to the invention is a blow molding process.

Blow molding, also known as blow forming, is a manufacturing process by which in general hollow thermoplastic articles are formed. In principle the process has two phases. First, a pre-form (or parison) of molten thermoplastic composition is formed, often in a tubular shape. Second, a pressurized gas, usually air, is used to expand the hot preform and press it against a mold cavity. The temperature of the mold is low enough, so that the polymer composition will solidify. The pressure is held until the plastic cools. Once the plastic has cooled and solidified the mold opens up and the part is ejected.

In general, there are three main types of blow molding: extrusion blow molding, injection blow molding, and stretch blow molding.

In extrusion blow molding the polymer composition is melted and extruded through an annular slit die into a hollow tube as pre-form. The pre-form is also called a parison.

In the injection blow molding process a thermoplastic material is injection molded into the pre-form.

Stretch blow molding is the method of producing a plastic container from a pre-form that is stretched in both the hoop direction and the axial direction when the pre-form is blown into its desired container shape.

Good examples of shaped objects that may be formed with the process of the present invention further include corrugated tubes, that may be used for the production of jounce bumpers, covers for constant velocity joints in car industry etc.

The invention will be further explained in the examples, without being limited to the examples.

Materials used:

*Thermoplastic elastomer (A):*

A1=Arnitel CM551, a copolycarbonateester, supplied by DSM, MFR=10 g/10min (230°C, 2.16kg, ASTM D1238)
A2= Arnitel EM400, a copolyetherester, supplied by DSM, MFR= 30 g/10min (230°C, 2.16kg, ASTM D1238)
A3 = Desmopan, DP9395A/AU, a thermoplastic polyurethane, supplied by Bayer.

*Thermoplastic polymer (B).*

Kraton RP6936, SEBS, supplied by Kraton Polymers.
Kraton MD6945, SEBS, supplied by Kraton Polymers.

Measurement of n*1 and n*2 .

The complex shear viscosity of thermoplastic polymer (B) was measured according to ISO 6721-10:1999 at a temperature of 240 °C. For the measurements an Ares ™ LS plate-plate rheometer was used.
The results are given in table 1.

Table 1. Complex shear viscosities of the thermoplastic polymers (B).

|  |  | n*1 (0.1 rad/s) [Pas] | n*2 (100 rad/s) [Pas] | n*1 /n*2 |
|---|---|---|---|---|
| B1 | Kraton RP6936 | 46500 | 1970 | 23.6 |
| B2 | Kraton MD6945 | 5135 | 653 | 7.8 |

Compounding of compositions containing thermoplastic elastomer (A) and thermoplastic polymer (B).

For the preparations of polymer compositions, ingredients were compounded in ratios as indicated in Table 2 (examples 1 - 5). The compositions were prepared by melt-blending thermoplastic elastomer A with thermoplastic polymer B on a ZE 25 twin-screw extruder with screw speed 400 rpm, throughput 30 kg/hr, and melt temperature regulated at 270°C, extruding the melt from the extruder through a die, cooling in a water bath and subsequently granulating the polymer strang. The granules obtained by compounding in the extruder were dried for 24 hours at 120°C, prior to further use.

Blow molding

Compositions are processed on a medium size extrusion blow molding equipment at 240°C. The behavior of the parison is observed.
The results of comparative experiments_A, B and C, wherein the pure thermoplastic elastomers are tested and the results of examples 1 - 5, wherein the compositions containing the thermoplastic polymers are tested are given in table 2.

Table 2. Compositions tested and results of parison behavior.

|  | Comp. Exp. A | Comp. Exp. B | Comp. Exp. C | Ex1 | Ex2 | Ex3 | Ex4 | Ex5 |
|---|---|---|---|---|---|---|---|---|
| A1 | 100 |  |  | 60 | 40 |  |  | 40 |
| A2 |  | 100 |  |  |  | 40 |  |  |
| A3 |  |  | 100 |  |  |  | 40 |  |
| B1 |  |  |  | 40 | 60 | 60 | 60 |  |
| B2 |  |  |  |  |  |  |  | 60 |
|  |  |  |  |  |  |  |  |  |
| Parison stability | Not stable | Not stable | Not stable | good | good | good | good | good |

In comparative experiments A, B and C the parison is not stable. The parison sags immediately after forming, so that it is not possible to handle the parison to blow an article out of the parison.
In examples 1 - 5 according to the invention the parison is stable and it is very well possible to produce shaped articles out of the compositions.

**Claims**

1. Process for producing a shaped article of a polymer composition containing a thermoplastic elastomer (A) chosen out of the group of a copolyester elastomer, a copolyamide elastomer and a thermoplastic polyurethane elastomer, comprising the steps:

    1) providing a pre-form at a temperature above the melting temperature of the composition,
    2) shaping the pre-form into the shape of the shaped article,
    3) cooling down the shaped pre-form to obtain the shaped article, **characterized in that**, the composition contains
    a thermoplastic polymer (B) that has a ratio

$$\eta^*1/\eta^*2 > 5 \quad (1),$$

    n*1 is the complex shear viscosity of the second thermoplastic elastomer measured at 240° C and a shear rate of 0.1 rad/s,
    n*2 is the complex shear viscosity of the second thermoplastic elastomer measured at 240° C at a shear rate of 100 rad/s,
    both viscosities measured according to ISO 6721-10:1999.

2. Process according to claim 1, wherein the thermoplastic elastomer (A) is a thermoplastic copolyester elastomer.

3. Process according to claim 2, wherein the thermoplastic copolyester elastomer is a copolycarbonateester elastomer.

4. Process according to any one of claims 1 - 3, wherein n*1 /n*2 > 8.

5. Process according to any one of claims 1 - 4, wherein n*1 > 1000 Pa.s.

6. Process according to any one of claims 1 - 5, wherein the thermoplastic polymer (B) is a styrene block copolymer.

7. Process according to claim 6, **characterized in that** the styrene block copolymer is styrene-ethylene-butylene-styrene copolymer (SEBS).

8. Process according to any one of claims 1 - 7, wherein the thermoplastic elastomer has a melt flow rate of at least 1 g/10 min (230°C, 2.16kg, ASTM D1238).

9. Process according to any one of claims 1 - 8, which process is a blow moulding process.

Europäisches
Patentamt

European
Patent Office

Office européen
des brevets

# EUROPEAN SEARCH REPORT

Application Number

EP 09 17 6529

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 03/042299 A1 (DU PONT [US]) 22 May 2003 (2003-05-22) * page 2, line 10 - page 3, line 18; examples * | 1-9 | INV. C08L67/02 C08L69/00 C08L75/04 C08L77/12 C08L53/00 C08L53/02 |
| A | WO 90/10674 A1 (DOW CHEMICAL CO [US]) 20 September 1990 (1990-09-20) * page 4, line 4 - page 5, line 9 * * experiments 2,5 to 7; page 15, line 11 - line 32 * | 1-9 | |
| X | CA 1 319 772 C (ABC GROUP [CA]) 29 June 1993 (1993-06-29) * page 1, line 8 - line 16 * * page 4, line 5 - line 16 * * page 5, line 7 - line 23; tables 4,5 * | 1-9 | |
| A | EP 0 369 164 A1 (TERUMO CORP [JP]) 23 May 1990 (1990-05-23) * page 5, line 7; examples * | 1-9 | |
| X | US 4 410 595 A (MATSUMOTO KOICHI [JP] ET AL) 18 October 1983 (1983-10-18) * column 1, line 65 - column 2, line 39 * * column 7, line 2; example 7 * | 1-9 | TECHNICAL FIELDS SEARCHED (IPC)<br><br>C08L |
| X | US 4 238 574 A (MEGNA IGNAZIO S [US]) 9 December 1980 (1980-12-09) * column 1, line 46 - line 54 * * column 3, line 15 - line 45; examples * | 1-9 | |
| A | EP 0 505 162 A1 (TORAY INDUSTRIES [JP]) 23 September 1992 (1992-09-23) * page 2, line 39 - page 3, line 33 * | 1-9 | |
| A,D | US 2009/203871 A1 (MARUYAMA GAKU [JP] ET AL) 13 August 2009 (2009-08-13) * page 7, paragraph 75; claims; examples * | 1-9 | |

The present search report has been drawn up for all claims

| Place of search | Date of completion of the search | Examiner |
|---|---|---|
| Munich | 24 March 2010 | Masson, Patrick |

EPO FORM 1503 03.82 (P04C01)

## ANNEX TO THE EUROPEAN SEARCH REPORT
## ON EUROPEAN PATENT APPLICATION NO.

EP 09 17 6529

This annex lists the patent family members relating to the patent documents cited in  the above-mentioned European search report.
The members are as contained in the European Patent Office EDP file on
The European Patent Office is in no way liable for these particulars which are merely given for the purpose of information.

24-03-2010

| Patent document cited in search report | | Publication date | Patent family member(s) | | Publication date |
|---|---|---|---|---|---|
| WO 03042299 | A1 | 22-05-2003 | CA | 2457748 A1 | 22-05-2003 |
| | | | EP | 1432761 A1 | 30-06-2004 |
| | | | JP | 2006515635 T | 01-06-2006 |
| WO 9010674 | A1 | 20-09-1990 | AU | 5187490 A | 09-10-1990 |
| | | | BR | 9007201 A | 18-02-1992 |
| | | | CA | 2047667 A1 | 09-09-1990 |
| | | | EP | 0462185 A1 | 27-12-1991 |
| | | | JP | 4505628 T | 01-10-1992 |
| CA 1319772 | C | 29-06-1993 | NONE | | |
| EP 0369164 | A1 | 23-05-1990 | AU | 619905 B2 | 06-02-1992 |
| | | | AU | 4279989 A | 26-04-1990 |
| | | | DE | 68905298 D1 | 15-04-1993 |
| | | | DE | 68905298 T2 | 17-06-1993 |
| | | | JP | 2107270 A | 19-04-1990 |
| US 4410595 | A | 18-10-1983 | CA | 1157990 A1 | 29-11-1983 |
| | | | DE | 3008749 A1 | 11-09-1980 |
| | | | FR | 2450853 A1 | 03-10-1980 |
| | | | GB | 2048903 A | 17-12-1980 |
| | | | IT | 1129738 B | 11-06-1986 |
| | | | NL | 8001397 A | 10-09-1980 |
| US 4238574 | A | 09-12-1980 | EP | 0039742 A1 | 18-11-1981 |
| | | | WO | 8103026 A1 | 29-10-1981 |
| EP 0505162 | A1 | 23-09-1992 | CA | 2063194 A1 | 19-09-1992 |
| | | | JP | 2045168 C | 09-04-1996 |
| | | | JP | 4288338 A | 13-10-1992 |
| | | | JP | 7081016 B | 30-08-1995 |
| US 2009203871 | A1 | 13-08-2009 | EP | 1964871 A1 | 03-09-2008 |
| | | | WO | 2007072748 A1 | 28-06-2007 |
| | | | JP | 4244067 B2 | 25-03-2009 |
| | | | KR | 20080075131 A | 14-08-2008 |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0102115 B1
- EP 0846712 A
- EP 1964871 A

**Non-patent literature cited in the description**

- Thermoplastic Elastomers. Carl Hanser Verlag, 1996
- Handbook of Thermoplastics. Marcel Dekker Inc,
- Encyclopedia of Polymer Science and Engineering. John Wiley and Sons, 1988, vol. 12, 75-117